# EUROPÄISCHE PATENTANMELDUNG

(11) **EP 0 973 279 A2**
(43) Veröffentlichungstag der Anmeldung: **19.01.2000**
(21) Anmeldenummer: 99440191.7
(22) Anmeldetag: 09.07.1999
(51) Int. Cl.: H04B 10/18, H04B 10/155

(54) **Temperaturstabilisation eines Predistorters**

(30) Priorität: 15.07.1998 DE 19831717
(71) Anmelder: ALCATEL, 75008 Paris (FR)
(72) Erfinder: Braun, Klaus, 70435 Stuttgart (DE); Berger, Werner, 71254 Ditzingen (DE)
(74) Vertreter: Menzietti, Domenico, Dipl.-Ing

(57) **Zusammenfassung**

Eine Schaltung zum Verringern der Temperaturabhängigkeit einer Predistorterdiode eines Predistorters (Vorverzerrers) für einen externen optischen Modulator ist dadurch gekennzeichnet, daß die Predistorterdiode (D1, D2) mit einem ohmschen Widerstand (Rv) in Serie geschaltet ist und die Serienschaltung im Betrieb von einer Spannungsquelle gespeist wird, wobei die Spannung V1 der Spannungsquelle und der ohmsche Widerstand so gewählt sind, daß bei einer Änderung der Temperatur der Predistorterdiode sich die Krümmungen der temperaturabhängigen Strom-Spannungs-Kennlinie der Predistorterdiode im jeweiligen Arbeitspunkt wenig unterscheiden. Ein Vorteil der Erfindung liegt in der äußerst einfachen Art einer Kompensation, die ermöglicht wird.

## Beschreibung

Die Erfindung betrifft eine Schaltung zum Verringern der Temperaturabhängigkeit einer Pred istorterdiode eines Predistorters (Vorverzerrers) für einen externen optischen Modulator.

Zum Einstellen des Arbeitspunkts einer Diode in einem signalbeeinflussenden Netzwerk ist einerseits Stromeinprägung bekannt, andererseits Spannungseinprägung.

In US-A-5_210_633, Figur 2 ist eine Anordnung mit Stromeinprägung gezeigt. Bei einer derartigen Anordnung ändert sich die an der Diode liegende Gleichspannung in Abhängigkeit von Pegelschwankungen des von der Diode durchgelassenen Signals, das ein Hochfrequenzsignal sein kann. Bei dieser bekannten Anordnung kann somit dann, wenn es sich bei dem Diodennetzwerk um eine Vorverzerrerschaltung (Predistorter) zum Linearisieren des Ausgangssignals eines optischen Modulators handelt, der Arbeitspunkt nur für einen einzigen Wert der Amplitude des Hochfrequenzsignals optimal eingestellt werden. Daher ist bei der bekannten Anordnung eine Nachführung der Stromquellen entsprechend der Amplituden des Eingangssignals für eine optimale Linearisierung der Kennlinie erforderlich.

Durch US-A-5 161 044, Figur 15 ist ein Diodennetzwerk zum Linearisieren des Ausgangssignals eines externen optischen Modulators, durch den das eine Lichtquelle verlassende Licht moduliert wird, bekannt. Die Dioden sind dort mit Spannungsquellen verbunden. Da es sich um Halbleiterdioden handelt, ist deren Strom-Spannungs-Kennlinie temperaturabhängig. Daher ändert sich ohne besondere Maßnahmen bei Temperaturänderungen der Arbeitspunkt der Diode. Es ist auch bereits bekannt, die Spannung von Predistorterdioden mittels Rechner nach einer Temperaturtabelle nachzuführen, wobei ein Temperatursensor und ein Analog/Digital-Wandler sowie ein Digital/Analog-Wandler benötigt werden. Hierdurch wird jedoch ein relativ großer Aufwand verursacht.

Außerdem ist es im Stand der Technik bekannt, das Problem dadurch zu vermeiden, daß die Predistorterdioden auf einer konstanten Temperatur gehalten werden, was beispielsweise durch Peltier-Kühlung erreicht wird.

Der Erfindung liegt die Aufgabe zugrunde, den Einfluß der Temperaturabhängigkeit des Arbeitspunkts einer Predistorterdiode zu verringern.

Diese Aufgabe wird gemäß der Erfindung dadurch gelöst, daß die Predistorterdiode mit einem ohmschen Widerstand in Serie geschaltet ist und die Serienschaltung im Betrieb von einer Spannungsquelle gespeist wird, wobei die Spannung der Spannungsquelle und der ohmsche Widerstand so gewählt sind, daß bei einer Änderung der Temperatur der Predistorterdiode sich die Krümmungen der temperaturabhängigen Strom-Spannungs-Kennlinie der Predistorterdiode im jeweiligen Arbeitspunkt wenig oder nicht unterscheiden.

Ein Vorteil der Erfindung liegt in der äußerst einfachen Art einer Kompensation, die durch die Erfindung ermöglicht wird. Die einfachste Lösung besteht darin, daß der Predistorterdiode ein Widerstand vorgeschaltet ist, wobei die Serienschaltung aus Widerstand und Predistorterdiode an einer konstanten Spannung liegt. Der Widerstand ist so bemessen (z.B. durch Versuche), daß sich die gewünschte Temperaturkompensation ergibt. Wichtig ist, daß die Krümmung der Kennlinie im jeweiligen Arbeitspunkt im wesentlichen die selbe ist. Diese Krümmung ist für die Oberwellenbildung und somit für die verzerrenden Eigenschaften der Predistorterdiode wichtig. Es kann vorteilhaft sein, auch die Steilheit der Kennlinie im jeweiligen Arbeitspunkt möglichst konstant zu halten.

Weiter ist von Vorteil, daß selbst dann, wenn der Arbeitspunkt der Predistorterdiode gegen Temperaturabhängigkeit bereits in anderer Weise stabilisiert worden ist, durch die erfindungsgemäße Maßnahme die bei Temperaturschwankungen dennoch verbleibende Änderung der Kennlinienkrümmung der Predistorterdiode im jeweiligen Arbeitspunkt durch die erfindungsgemäße Maßnahme verringert oder vollständig kompensiert werden kann.

Bei einer Ausführungsform der Erfindung wird die Spannung an einer Referenzdiode, die mit den Predistorterdioden thermisch gekoppelt ist, den Predistorterdioden als Versorgungsspannung eingeprägt. Dabei kann für zwei Zweige des Signalwegs eine einzige Referenzdiode ausreichen.

Da bei den hier betrachteten Predistorterdioden, bei denen es sich um Halbleiterdioden handelt, der Diodenstrom bei konstanter Spannung mit steigender Temperatur steigt, läßt sich die Erfindung ohne Schwierigkeit einsetzen.

Weitere Merkmale und Vorteile der Erfindung ergeben sich aus der nachfolgenden Beschreibung von Ausführungsbeispielen der Erfindung anhand der Zeichnung, die erfindungswesentliche Einzelheiten zeigt, und aus den Ansprüchen. Die einzelnen Merkmale können je einzeln für sich oder zu mehreren in beliebiger Kombination bei einer Ausführungsform der Erfindung verwirklicht sein. Es zeigen
- Fig. 1: ein erstes Ausführungsbeispiel einer erfindungsgemäßen Predistorterschaltung,
- Fig. 2: ein zweites Ausführungsbeispiel einer erfindungsgemäßen Predistorterschaltung,
- Fig. 3: Strom-Spannungs-Kennlinien einer Predistorterdiode bei verschiedenen Temperaturen,
- Fig. 4: ein Blockschaltbild der Anordnung mit einem optischen Modulator und einem erfindungsgemäßen Diodennetzwerk als Vorverzerrerschaltung.

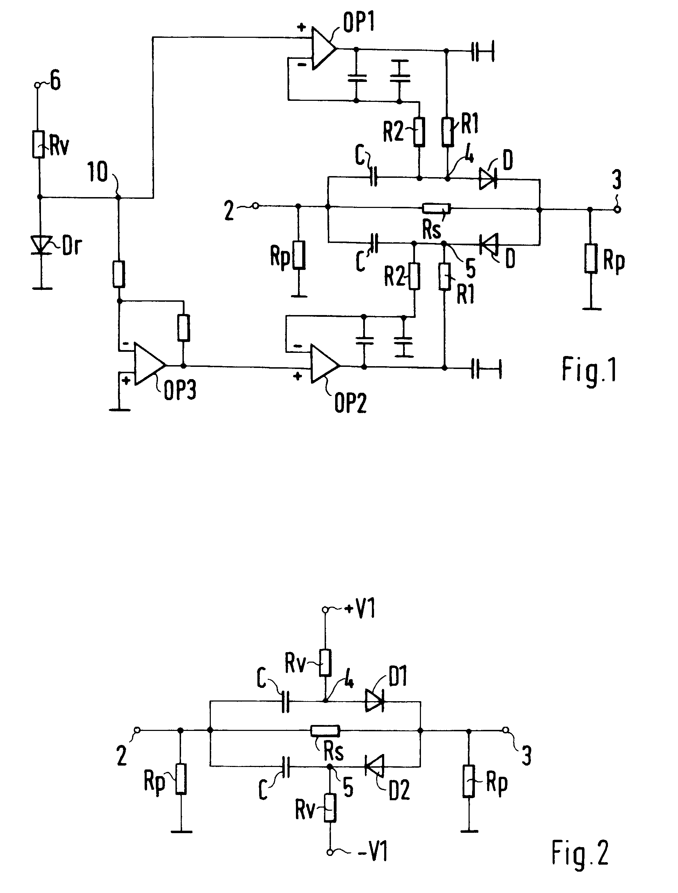

In Fig. 1 befindet sich der Signalweg einer Predistorterschaltung 1 zwischen einem Anschluß 2 (Eingang) und einem Anschluß 3 (Ausgang). Die Bedeutung dieser Anschlüsse 2 und 3 könnte auch vertauscht werden. Der Anschluß 2 einerseits und der Anschluß 3 andererseits sind jeweils über einen ohmschen Widerstand Rp mit Masse verbunden und die Anschlüsse 2 und 3 sind miteinander durch einen Widerstand Rs verbunden. Hochfrequenzkomponenten des Signals fließen vom Anschluß 2 zum Anschluß 3, außerdem über zwei parallele Zweige, die jeweils aus der Serienschaltung eines Kondensators C und einer Diode D (Halbleiterdiode) gebildet sind, wobei die Dioden in den beiden Zweigen entgegengesetzt gepolt sind und die Kondensatoren C unmittelbar miteinander verbunden sind. Die Dioden D sind die Predistorterdioden.

Ein Operationsverstärker OP1 weist einen Ausgang auf, der über einen Widerstand R1 mit dem Verbindungspunkt 4 zwischen dem Kondensator C und der mit diesem verbundenen Anode der Diode D des oberen Zweiges verbunden ist. Der Verbindungspunkt 4 ist außerdem über einen Widerstand R2 mit dem invertierenden Eingang des Operationsverstärkers OP1 verbunden. Der nicht-invertierende Eingang des Operationsverstärkers OP1 ist mit der Anode einer Referenzdiode Dr verbunden, deren Kathode an Masse liegt. Die Anode der Referenzdiode Dr ist über einen ohmschen Widerstand Rv mit einem Anschluß 6 verbunden, der im Betrieb an einer konstanten Spannung V1 liegt. Einige zum Operationsverstärker OP1 führende Leitungen sind noch mit Kondensatoren in der gezeigten Weise mit Masse und untereinander verbunden, um Hochfrequenz aus dem Signalweg zwischen den Anschlüssen 2 und 3 vom Operationsverstärker OP1 fernzuhalten. Die Referenzdiode ist, was bevorzugt ist, vom selben Typ wie die Predistorterdioden D.

Derjenige Teil des Signalwegs, der der in Fig. 1 unteren Diode D zugeordnet ist, die entgegengesetzt gepolt wie die obere Diode D angeordnet ist, ist in ähnlicher Weise mit einem Operationsverstärker OP2 verbunden, wobei deswegen, weil der Ausgang des Operationsverstärkers OP2 über den diesem zugeordneten Widerstand R1' an einem Verbindungspunkt 5 mit der Kathode der Diode D des unteren Zweigs verbunden ist, dieser Operationsverstärker OP2 eine negative Ausgangsspannung liefern muß. Daher wird im Beispiel die an der Referenzdiode Dr abfallende Spannung, die an einem Schaltungspunkt 10 anliegt, über einen Inverter, der in bekannter Weise von einem Operationsverstärker OP3 gebildet wird, in der Polarität umgekehrt und dem nicht-invertierenden Eingang des Operationsverstärkers OP2 des unteren Zweigs der Fig. 1 zugeführt.

Die gezeigte Beschaltung der Operationsverstärker OP1 und OP2 sorgt dafür, daß diese eine Spannungsverstärkung mit dem Wert 1 haben, so daß am Schaltungspunkt 4 und 5 jeweils die gleiche Spannung (wie erläutert mit unterschiedlicher Polarität) herrscht wie an der zugeordneten Referenzdiode Dr.

Der Widerstand R1 in Fig 1 dient zur Entkopplung des jeweiligen Operationsverstärkers von dem Hochfrequenzsignal auf dem Signalweg zwischen den Anschlüssen 2 und 3. Die Schaltung erfaßt die Spannung an den Verbindungspunkten 4 und 5 und regelt diese auf den von der Referenzdiode vorgegebenen Wert. Der Widerstand R1 beeinflußt nicht die Spannung an den Verbindungspunkten 4 und 5. Die Widerstände, die bei den gezeigten Schaltungsanordnungen verwendet werden, sind extrem induktivitätsarm und kapazitätsarm. Vorzugsweise sind sog. SMD-Widerstände (Surface Mounted Device-Widerstände) verwendet. Die Schaltung kann daher ohne weiteres beispielsweise bis zu einer Frequenz von etwa 860 MHz betrieben werden.

Bei der Anordnung nach Fig. 2 sind lediglich die Unterschiede gegenüber der Anordnung nach Fig. 1 erwähnt. In Fig. 2 sind keine Operationsverstärker und keine Referenzdiode vorhanden. Die Predistorterdioden sind hier mit D1 und D2 bezeichnet. Die Verbindungspunkte 4 und 5 stehen unmittelbar über je einen Widerstand Rv in der selben Größe wie bei Fig._1 mit einer positiven Spannung V1 bzw. einer negativen Spannung -V1 in Verbindung, die in ihrer Größe dem Wert von V1 in Fig. 1 gleich ist.

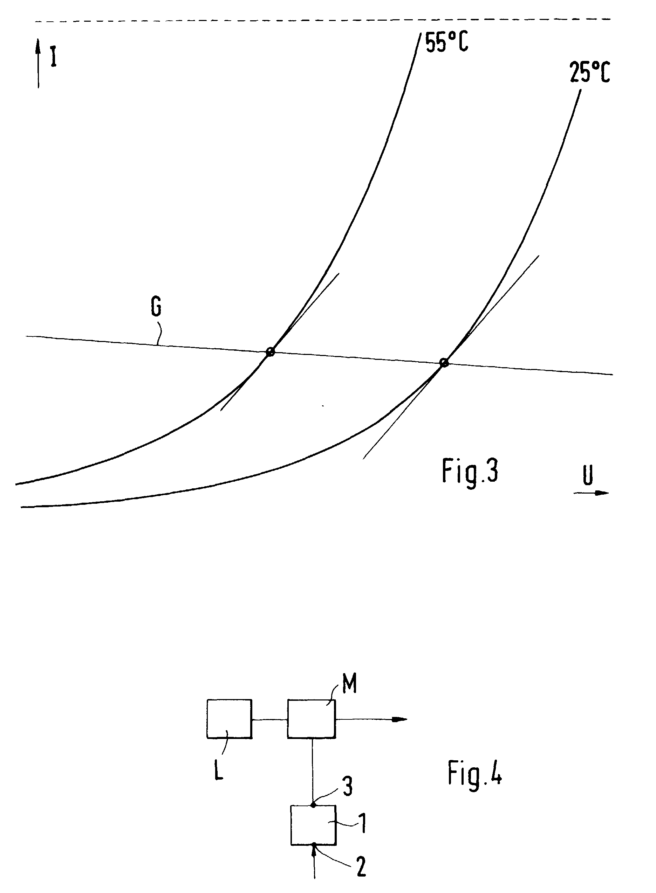

Fig. 3 zeigt ein Strom-Spannungs-Kennlinienfeld, bei dem für zwei Temperaturen (25 °C und 55 °C) Kennlinien der Predistorterdioden gezeichnet sind. Diese sind auch die Kennlinien der Referenzdiode Dr. In den Anordnungen nach Fig. 1 und Fig. 2 definieren die Spannung V1 sowie die Widerstände Rv eine Arbeitsgerade G in diesem Kennlinienfeld. Diese schneidet die nicht sichtbare Spannungsachse im Punkt U = V1 und die nicht sichtbare Stromachse im Punkt I = V1/Rv. V1 und Rv sind so bemessen, daß die Arbeitsgerade G die Kennlinien in Punkten (= Arbeitspunkten) schneidet, in denen die Krümmungen gleich groß sind. Bei Temperaturen im Bereich zwischen den soeben genannten Werten liegt der Arbeitspunkt auf anderen, nicht gezeigten Kennlinien. Es wird angenommen, daß die Krümmungen dieser Kennlinien an den jeweiligen Arbeitspunkten (das sind die Schnittpunkte mit der Arbeitsgeraden G) sich nicht stark von den Krümmungen bei den gezeigten Arbeitspunkte unterscheiden.

Die Arbeitsgerade verläuft ziemlich flach (nahe einem waagrechten Verlauf), aber nicht waagrecht. Daher liegt nicht der Fall einer Speisung durch eine Stromquelle vor, also nicht der Fall einer Speisung mit konstantem Strom; hierbei würde die Arbeitsgerade waagrecht verlaufen.

Die Krümmung (d²I/dU²) jeder einzelnen Kennlinie ist von der Spannung und daher vom Arbeitspunkt abhängig.

Es versteht sich, daß die Beschaltung der Operationsverstärker bei Bedarf so geändert werden kann, daß eine Verstärkung erreicht wird, die von 1 verschieden ist. Hierzu muß bekanntlich der invertierende Eingang zusätzlich über einen geeigneten Widerstand mit Masse verbunden werden. Es versteht sich auch, daß bei Bedarf anstatt einer einzigen Predistorterdiode in jedem Zweig eine Serienschaltung mehrerer Predistorterdioden vorhanden sein kann, die mit einer entsprechend höheren Spannung versorgt werden müssen. Mehrere in Serie geschaltete Predistorterdioden werden z.B. verwendet, wenn sich mit nur einer Predistorterdiode die gewünschte Verzerrerkennlinie nicht erzeugen läßt.

Die Referenzdiode Dr ist in enger thermischer Kopplung mit den Dioden D zwischen den Anschlüssen 2 und 3 angeordnet, so daß diese Elemente auf praktisch der gleichen Temperatur liegen und dadurch eine sehr gute Kompensation der Temperaturabhängigkeit der Predistorterdioden D erfolgt.

Bei der Anordnung nach Fig. 4 sendet eine Lichtquelle L unmoduliertes Licht aus, das über einen Lichtleiter einem Eingang eines externen optischen Modulators M zugeführt wird und den Modulator M als moduliertes Licht verläßt. Das Modulationssignal wird über den Signalweg zwischen den Anschlüssen 2 und 3 der Anordnung 1 nach Fig. 1 (wahlweise auch der anderen gezeigten Anordnung) dem Modulationseingang des Modulators M zugeführt. In den Signalweg zwischen Anordnung 1 und Modulator M kann auch noch ein Verstärker geschaltet werden.

Der externe Modulator weist im Beispiel eine bekannte Phasenmodulatoranordnung mit einem optischen Element auf der Basis von Lithiumniobat (LiNbO₃) auf. Das Ausgangssignal eines derartigen Modulators ist im wesentliche eine Kosinusquadratfunktion des Eingangssignals; steigt somit das Eingangssignal linear an, so hat das Ausgangssignal des Modulators einen sinusförmigen Verlauf. Die erfindungsgemäße Predistorterschaltung hat als Vorverzerrer die Aufgabe, die erste halbe Periode symmetrisch zum Wendepunkt der Sinuskurve zu linearisieren. Dies geschieht dadurch, daß das Modulationssignal zuerst durch den Vorverzerrer (Predistorter) so verändert wird, daß es bei seiner anschließenden Zuführung zum Modulator das gewünschte, bezüglich des nicht-vorverzerrten Modulationssignals (= Hochfrequenzsignal) linear modulierte Lichtsignal erzeugt.

## Patentansprüche

1. Schaltung zum Verringern der Temperaturabhängigkeit einer Predistorterdiode eines Predistorters (Vorverzerrers) für einen externen optischen Modulator, dadurch gekennzeichnet, daß die Predistorterdiode (D1, D2) mit einem ohmschen Widerstand (Rv) in Serie geschaltet ist und die Serienschaltung im Betrieb von einer Spannungsquelle gespeist wird, wobei die Spannung V1 der Spannungsquelle und der ohmsche Widerstand so gewählt sind, daß bei einer Änderung der Temperatur der Predistorterdiode sich die Krümmungen der temperaturabhängigen Strom-Spannungs-Kennlinie der Predistorterdiode im jeweiligen Arbeitspunkt wenig unterscheiden.

2. Schaltung zum Verringern der Temperaturabhängigkeit einer Predistorterdiode eines Predistorters (Vorverzerrers) für einen externen optischen Modulator, dadurch gekennzeichnet, daß eine mit der Predistorterdiode (D) thermisch gekoppelte Referenzdiode (Dr) mit einem ohmschen Widerstand (Rv) in Serie geschaltet ist und die Serienschaltung im Betrieb von einer Spannungsquelle gespeist wird, wobei die Spannung V1 der Spannungsquelle und der ohmsche Widerstand so gewählt sind, daß bei einer Änderung der Temperatur der Referenzdiode sich die Krümmungen der temperaturabhängigen Strom-Spannungs-Kennlinie der Predistorterdiode im jeweiligen Arbeitspunkt wenig unterscheiden, und daß eine Einrichtung zum Speisen der Predistorterdiode mit einer Spannung, die der Spannung an der Referenzdiode (Dr) proportional ist, vorgesehen ist.

3. Vorrichtung nach Anspruch 2, dadurch gekennzeichnet, daß die Einrichtung zum Speisen einen Verstärker aufweist.

4. Vorrichtung nach Anspruch 3, dadurch gekennzeichnet, daß die Einrichtung zum Speisen eine Regelvorrichtung aufweist.

5. Vorrichtung nach Anspruch 3 oder 4, dadurch gekennzeichnet, daß der Verstärker ein Spannungsverstärker ist, dessen Verstärkereingang die Spannung an der Referenzdiode (Dr) zugeführt ist.

6. Vorrichtung nach Anspruch 5, dadurch gekennzeichnet, daß ein Signalweg für das zu verzerrende Signal zwei parallele Zweige mit jeweils einer Serienschaltung aus einem Kondensator (C) und mindestens einer Predistorterdiode (D) aufweist, wobei die Predistorterdiode bzw. Predistorterdioden des einen Zweigs entgegengesetzt gepolt zu der Predistorterdiode bzw. den Predistorterdioden des anderen Zweigs angeordnet sind, daß ein Verbindungspunkt (4, 5) zwischen dem Kondensator (C) und einer Predistorterdiode (D) in jedem Zweig jeweils mit dem Ausgang eines als Spannungsverstärker geschalteten Operationsverstärkers (OP1, OP2) gekoppelt ist, und daß dem nicht-invertierenden Eingang des einen Operationsverstärkers (OP1) der Spannungsabfall an der Referenzdiode (Dr) mit positiver Polarität und dem entsprechenden Eingang des anderen Operationsverstärkers (OP2) mit negativer Polarität zugeführt ist.

7. Vorrichtung nach Anspruch 6, dadurch gekennzeichnet, daß der nicht-invertierende Eingang eines der Operationsverstärker (OP1) mit einer Referenzdiode (Dr) verbunden ist, und daß die Spannung an dieser Referenzdiode dem nicht-invertierenden Eingang des anderen Operationsverstärkers (OP2) über einen Inverter zugeführt ist.

8. Predistorter eines externen optischen Modulators, gekennzeichnet durch eine Vorrichtung nach einem der Ansprüche 1 bis 7.
